# EUROPEAN PATENT APPLICATION

(11) **EP 1 187 347 A1**
(43) Date of publication of application: **13.03.2002**
(21) Application number: 01908129.8
(22) Date of filing: 28.02.2001
(51) Int. Cl.: H04B 1/16

(54) **RECEIVING DEVICE AND RECEIVING METHOD**

(30) Priority: 29.02.2000 JP 2000054269; 03.10.2000 JP 2000303518
(71) Applicant: Sony Corporation, Tokyo 141-0001 (JP)
(72) Inventor: INOSE, Kenji, c/o Sony Corporation, Tokyo 141-0001 (JP); FUKUZAWA, Keiji, c/o Sony Corporation, Tokyo 141-0001 (JP)
(74) Representative: Mills, Julia
(86) International application number: JP0101489
(87) International publication number: WO0165710

(57) **Abstract**

To easily cope with change in methods of media. A CPU 22 controls a front end 21 including a tuner 41, a demodulator 42, and an error corrector 43 indirectly with a common control command, independent of a zone and a transmission medium. That is, an application program 22A of the CPU 22 creates a control command based on a command set defined in advance, and sends it out to the front end 21 via an interface 22B. The control application 40B of the front end 21 converts the control command transferred via the interface 40A into a data format recognizable for the tuner 41, the demodulator 42, and the error corrector 43, and transfers it to a driver 40C. The driver 40C controls each processing unit based on the control command.

## Description

### Technical Field

The present invention relates to a receiving apparatus and method, and is particularly applicable to a receiving apparatus and method for receiving and demodulating broadcasting waves distributed via a broadcasting satellite in a digital satellite broadcasting system (a transmission medium).

### Background Art

In recent years a digital satellite broadcasting system has been proposed to distribute hundreds of programs to audiences via a broadcasting satellite using carrier frequencies allocated to corresponding channels.

In an IRD (Integrated Receiver Decoder) being a device to receive each carrier frequency in this digital satellite broadcasting system, a receiving and demodulating device provided therein is designed to obtain a transport stream by receiving carrier frequencies (satellite broadcasting waves) distributed via a broadcasting satellite and selecting and demodulating an arbitrary frequency out of the received carrier frequencies.

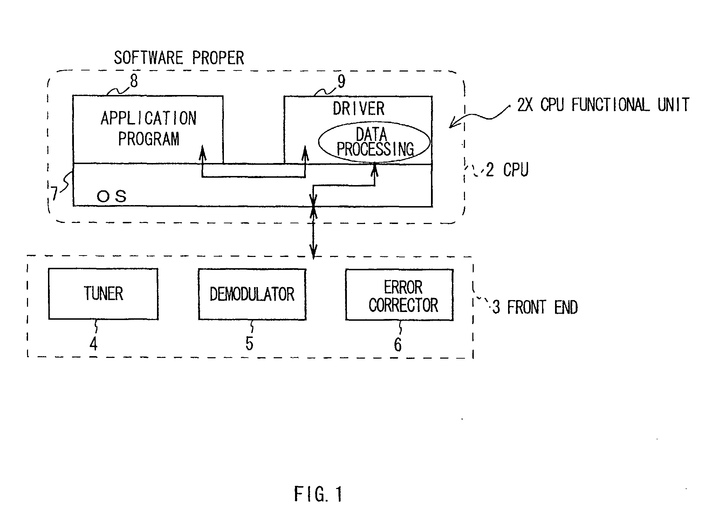

Fig. 1 shows an information transmission-reception relationship between a CPU 2 inside the IRD and a front end 3. The front end 3 being a receiving/demodulating device as a receiving/demodulating means consists of a tuner 4 to select a desired frequency, a demodulator 5 to demodulate a modulated signal, and an error corrector 6 to detect errors occurring during transmission, and to correct them by means of a given method, and is controlled by the CPU 2.

Designed to perform various processes in accordance with a program read out from a prescribed memory (not shown in figure), the CPU 2 comprises an operating system 7 (called "OS" hereinafter) as a CPU functional unit 2X for performing various processes, an application program 8, and a driver 9. The OS 7 is to conduct a variety of processes based on the application program 8 and the program of the driver 9.

In this connection, the OS 7, the application program 8, and the driver 9 are not physical blocks but functional ones.

When a user performs the operation of selecting a channel of a desired program with a given input means provided in the IRD, the application program 8 of the CPU functional unit 2X judges which carrier frequency a user-desired program is allocated to, and transmits the result (information on what hertz of a carrier frequency for the user-desired channel) to the driver 9.

The driver 9 performs a process on data so that the front end 3 (tuner 4, demodulator 5, and error corrector 6) can operate properly based on the judgement result transferred from the application program 8, resulting in the selection of an arbitrary frequency out of the carrier frequencies (satellite broadcasting waves) allotted to a zone, in Japan for example, where an IRD is used, and the selected carrier frequency is changed (set) so as to be outputted as a transport stream to the outside.

In this case, the tuner 4 selects a channel (carrier frequency) specified by the user out of the carrier frequencies received via a broadcasting satellite, and creates an intermediate frequency by conducting the given frequency converting process on the selected carrier frequency, and transmits it to the demodulator 5. The demodulator 5 performs the given demodulating process on the intermediate frequency supplied from the tuner 4, and transmits it to the error corrector 6. The error corrector 6 performs the given error correcting process on the transport stream with the use of a data line allocated in advance for conducting processes such as error detection, subsequently the resultant transport stream is outputted to outside the front end 3.

In such an IRD as described above, since the driver 9 inside the CPU functional unit 2X is to set a carrier frequency and a demodulating method predetermined for a designated zone, using the IRD outside of the designated zone presents a problem in that it is necessary to alter the hardware structure (namely, the tuner 4, the demodulator 5, and the error corrector 6) of the front end 3 in accordance with the carrier frequency and the demodulating method used in the zone, and the program of the driver 9 inside the CPU functional unit 2X for controlling the whole IRD has to be altered accordingly.

In such an IRD which receives a satellite broadcast, since the driver 9 inside the CPU functional unit 2X and the hardware of the front end 3 are designed to set a carrier frequency and a demodulating method in satellite broadcasting, the case of receiving a broadcast by a different transmission medium such as CATV (Cable Television) presents problems in that it is also necessary to alter the hardware structure of the front end 3 in accordance with a transmission medium, and the program of the driver 9 inside the CPU functional unit 2X has to be altered accordingly.

### Description of the Invention

The present invention is made in consideration of the above points, and is to propose a receiving/demodulating device, a receiving apparatus, and a method for controlling a receiving/demodulating device, so as to effectively control the receiving/demodulating device even in the case where a zone where a receiving/demodulating means is used and a transmission medium are changed.

The receiving apparatus according to the present invention comprises a receiving/demodulating means for performing given receiving and demodulating processes according to a transmission medium, and a main control means for controlling the operation of the receiving/demodulating means. The receiving/demodulating means comprises: a processing means for processing a signal received via a transmission medium; an interface means for performing an interfacing process to transmit and receive a control command for controlling the processing means to/from the main control means, using a given command set previously defined with the main control means, according to a given communication protocol, and a process control means for converting the control command obtained by the interfacing means from the main control means into data recognizable for the processing means, to control the processing means.

The control command may be a common control command independent of a transmission medium.

The control command may be a common control command independent of a reception zone where the processing means is used.

In addition, the main control means can further include a converting means for performing a converting process needed to transfer the control command through a bus.

The bus may be an IEEE1394 serial bus.

The receiving method of the receiving apparatus according to the present invention comprises a receiving/demodulating step of performing given receiving and demodulating processes in accordance with a transmission medium, and a main control step of controlling the receiving and modulating processes in the receiving/demodulating step. The receiving/demodulating step comprises: a processing step of processing a signal received via a transmission medium; an interface step of performing an interfacing process to transmit and receive a control command for controlling the process in the processing step to/from the main control means, with a given command set previously defined with the main control means for controlling the processes in the main control step, according to a given communication protocol; and a process control step of converting a control command obtained in the interfacing step from the main control means into data recognizable for the processing means for performing the process in the processing step, to controlling the process in the processing step.

In the receiving apparatus and receiving method of the present invention, given receiving and demodulating processes are conducted in accordance with a transmission medium. Also, a signal received via a transmission medium is processed, and an interfacing process is performed to transmit and receive a control command, using a given command set previously defined, in accordance with a given communication protocol. Furthermore, the control command obtained is converted to control processing of a signal received via the transmission medium.

### Brief Description of the Drawings

Fig. 1 is a block diagram explaining conventional data processing.
Fig. 2 is a block diagram showing a structural example of a digital broadcast receiving system applying the present invention.
Fig. 3 is a block diagram showing a structural example of an IRD 13 in Fig. 2.
Fig. 4 is a diagram explaining the structure of BS broadcasting waves in Japan.
Fig. 5 is a diagram explaining the transmission and reception relations of control commands between a front end 21 and a CPU 22 in an IRD 13 in Fig. 3.
Fig. 6 is a block diagram showing a structural example of another digital broadcast receiving system applying the present invention.
Fig. 7 is a diagram explaining the transmission and reception relations of control commands between a front end 21' and CPU 22 in an IRD 13' in Fig. 3.
Fig. 8 is a diagram showing the frequencies of digital broadcasting waves using CATV.
Fig. 9 is a diagram showing the frequencies of digital broadcasting waves using CS.
Fig. 10 is a diagram showing the frequencies of ground digital broadcasting waves.
Fig. 11 is a diagram showing a modulation method for each zone and transmission medium.
Fig. 12 is a block diagram showing a structural example of another digital broadcast receiving system applying the present invention.
Fig. 13 is a block diagram showing a structural example of an IRD 13' in Fig. 12.
Fig. 14 is a block diagram showing a structural example of a ground digital broadcast receiving adapter 61 in Fig. 12.
Fig. 15 is a diagram explaining the transmission and reception relations of control commands between the CPU 22 of an IRD 13" and the CPU 72 of the ground digital broadcast receiving adapter 61 in Fig. 12.

### Best Mode for Carrying out the Invention

Detailed description is given on one mode of carrying out the present invention hereinafter with reference to the drawings.

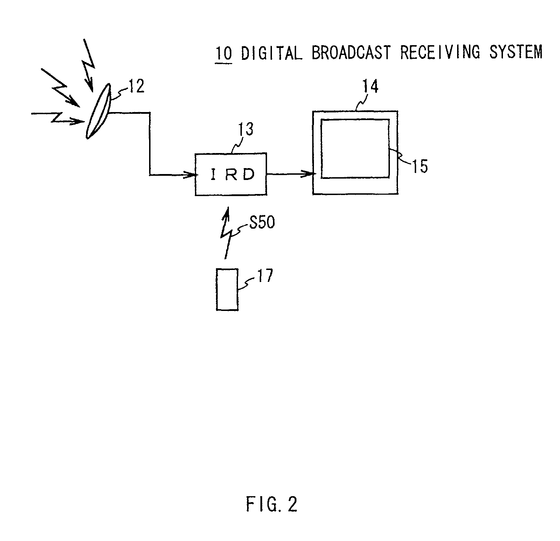

In Fig. 2, a reference numeral 10 shows a digital broadcast receiving system as a whole, wherein an IRD (Integrated Receiver/Demodulator) 13 is designed to receive via a parabola antenna 12 satellite broadcasting waves distributed via a broadcasting satellite (not shown in figure).

The IRD selects, as required, a user-desired channel (carrier frequency) out of satellite broadcasting waves received, based on an infrared signal S50 outputted via a remote controller 17, and outputs to a TV set 14 given data such as video data, audio data and program guide information (this program guide information is referred to as "Electronic Program Guide" hereinafter) obtained based on the selected carrier frequency. The TV set 14 visibly displays images, and a program guide if necessary, obtained based on the given data supplied from the IRD 13 on a monitor 15 such as a CRT (Cathode Ray Tube) or a liquid crystal display, with audio sounds outputted from a speaker (not shown in figure).

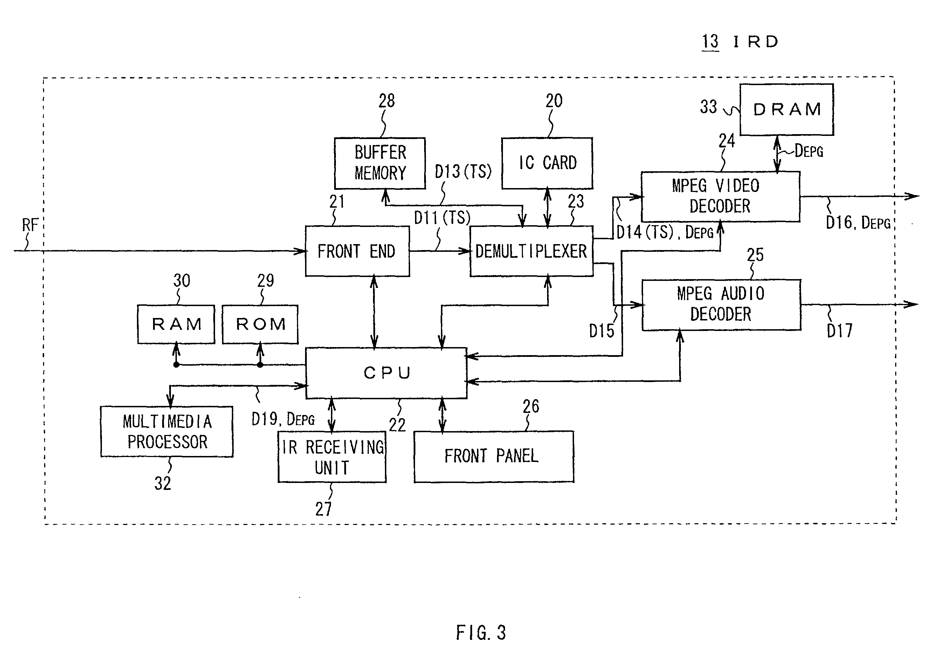

As the internal structure of the IRD 13, as shown in Fig. 3, when a user conducts a given operation to turn on the IRD 13, the CPU 22 loads a startup program stored in a ROM 29 on a RAM 30, to perform various processes according to the program. The CPU 22 receives a given command obtained by operating an operation button switch (not shown in figure) on a front panel 26, and loads a program corresponding to the command on the RAM 30 to control each circuit in accordance with the program.

By operating the operation keys of the remote controller 17, the command is outputted, superimposed onto the infrared signal S50 by the IR (Infrared) transmitter (not shown in figure) of the remote controller 17, and then the infrared signal S50 is received by a IR receiving unit 27 which supplies the result of the reception to the CPU 22. It means that the CPU 22 also receives the given command obtained by operating the remote controller 17, and then loads on the RAM 30 the given program corresponding to the command given, to control each circuit unit.

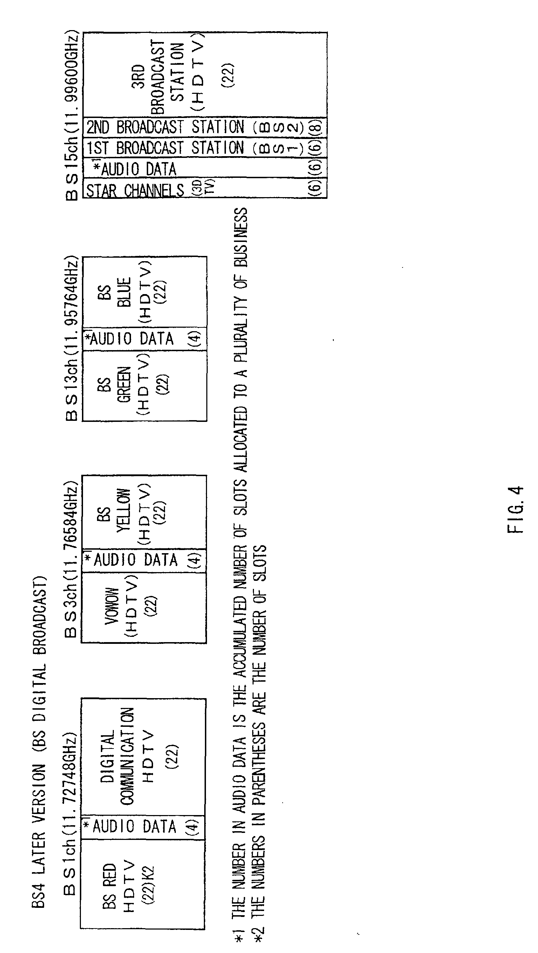

At this point, when the user specifies a first broadcast station as a desired channel out of the satellite broadcasting waves in Japan shown in Fig. 4 with the operation keys of the remote controller 17 (Fig. 2), for example, the specified command is outputted, superimposed onto the infrared signal 50 by the IR (Infrared) transmitter (not shown in figure) of the remote controller 17. Then, the infrared signal S50 is received by the IR receiving unit 27 which then supplies the received result to the CPU 22.

Thus the CPU 22 controls the front end 21 (Fig. 3) indirectly according to the specified channel, to select the carrier frequency of the first broadcast station specified by the user out of the received satellite broadcastings, and transmits a transport stream of MPEG (Moving Picture Experts Group) 2 which is distributed using the selected carrier frequency, to a demultiplexer 23 (Fig. 3).

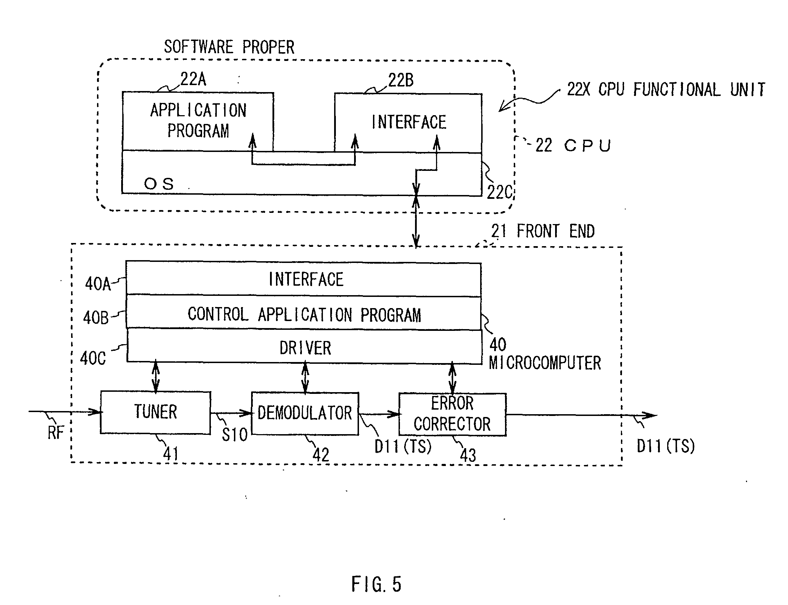

Fig. 5 shows an information transmission and reception relationship between the CPU 22 and front end 21. The CPU 22 having an operating system (this is referred to as "OS") 22C as a CPU functional unit 22X to perform various processes in accordance with a program read out of the ROM 29 (Fig. 3), an application program 22A, and an interface 22B. The OS 22C makes the application program 22A create a control command which is then transferred to the interface 22B.

The microcomputer 40 of the front end 21 is provided with an interface 40A to perform various processes according to a program read out of a prescribed memory (not shown in figure) inside the microcomputer 40, a control application program 40B as a control means for controlling a receiving/demodulating means (the tuner 41, the demodulator 42, and the error corrector 43), and a driver 40C. The interface 22B transfers a control command, which is transferred from the OS 22C, to the control application program 40B in accordance with the given procedure, using a command set defined in advance between the CPU 22 and the microcomputer 40, by a standardized communication protocol called I²C, for example, between the interface 40A inside the microcomputer 40 and the interface 22B.

The control application program 40B controls the tuner 41, the demodulator 42, and the error corrector 43 each having the hardware structure, via the driver 40C based on the control commands transferred via the interface 22B.

Accordingly, the CPU functional unit 22X as the main control means does not make the hardware structures (the tuner 41, the demodulator 42, and the error corrector 43) as the receiving/demodulating means perform (control) various processes directly, but only transmits a control command to the front end 21 so that the control application program 40B controls the hardware structures via the driver 40C, to perform various processes.

In this manner the CPU functional unit 22X can control the hardware structures indirectly, not controlling them directly.

Note that, the OS 22C, the interface 22B and the application program 22A inside the CPU 22 are not physical blocks but functional ones. Also, the interface 40A, the control application program 40B and the driver 40C inside the microcomputer 40 are not physical blocks but functional ones.

In the case where the CPU 22 is given a command to specify a first broadcast station as a channel of the satellite broadcasting waves from the remote controller 17 (Fig. 2), the OS 22C creates a control command to output the first broadcast station as an MPEG 2 transport stream to the demultiplexer 23 (Fig. 3) according to the application programs 22A, and supplies it to the interface 22B.

In this connection, information to display the EPG in the standardized format is superimposed onto the satellite broadcasting waves (first broadcast station).

The interface 22B transfers a control command to output the first broadcast transferred from the OS 22C, to the demultiplexer 23 (Fig. 3) as a MPEG 2 transport stream, following the given procedure, using a command set defined in advance between the microcomputer 40 and the CPU 22, by the regulations of a communication protocol, for example, I²C between the interface 22B and the interface 40A inside the microcomputer 40.

The control application program 40B reads a program to output the first broadcast station to the demultiplexer 23 (Fig. 3) as an MPEG 2 transport stream, from the prescribed memory (not shown in figure) inside the microcomputer 40, in response to the control command transferred from the interface 22B via the interface 40A, and then transfers the content of the program to the driver 40C.

The driver 40C controls the hardware structures by converting the content of the program transferred from the control application program 40B, into data that the hardware structures (the tuner 41, the demodulator 42, and the error corrector 43) can recognize.

That is, when the user specifies the first broadcast station with the remote controller 17 (Fig. 2), the tuner 41 selects an intermediate frequency S10 of 11.99600GHz of the BS15 channel, for example, by performing the tuning process to select the carrier frequency S10 of the first broadcast station out of the received satellite broadcasting waves RF, and supplies the intermediate frequency S10 to the demodulator 42. The demodulator 42 performs the demodulating process suitable for the first broadcast station specified, on the intermediate frequency S10 supplied from the tuner 41, thus taking out a data line D11 which is then transferred to the error corrector 43.

By using the data line which is used for an error correction and other processes and is allocated in advance in the data line D11 supplied from the demodulator 42, the error corrector 43 sends to the demultiplexer 23 (Fig. 3) the MPEG 2 transport stream obtained by applying an error detection and the error correction to the data line D11 .

Note that, as shown in Fig. 4, the control application program 40B (namely, a program stored into a prescribed memory (not shown in figure) of the microcomputer 40) has (stores) in advance various programs to output to the demultiplexer 23 an MPEG 2 transport stream distributed using a carrier frequency allocated to each channel of the satellite broadcasting waves in Japan (Fig. 4 shows a channel BS1, a channel BS3, and a channel BS13, in addition to a channel BS15). Accordingly, the control application program 40B can control the hardware structures via the driver 40C according to the control command, also in the case of receiving the control command to specify any channel out of the satellite broadcasting waves.

An IC (Integrated Circuit) card 20 (Fig. 3) comprising a CPU, a ROM, and a RAM, etc., shown in the IRD 13 in Fig. 3 stores information necessary to decode encryption. Since a digital broadcast distributed via a broadcasting satellite (not shown in figure) is encrypted, a key and a decoding process are needed to decode the encryption. Therefore, information to decode it is read from the IC card 20, and supplied to the demultiplexer 23. The demultiplexer 23 decodes the encrypted MPEG 2 transport stream D11 using this key, and temporary stores the decoded MPEG 2 transport stream D13 in a data buffer memory 28 which is a DRAM (Dynamic Random Access Memory) or a SRAM (Static Random Access Memory). Then, the demultiplexer 23 reads out, when necessary, and supplies MPEG2 video data D14 obtained by analyzing the read-out MPEG 2 transport stream D13 to an MPEG video decoder 24, and supplies MPEG 2 audio data D15 to an MPEG audio decoder 25.

The MPEG video decoder 24 restores the original video data D16 by applying the decoding process based on the MPEG 2 standards to the MPEG2 video data D14 supplied from the demultiplexer 23, and outputs it to the TV set 14 (Fig. 2).

On the other hand, the MPEG audio decoder 25 restores the original audio data D17 by applying the decoding process based on the MPEG 2 standards to the MPEG 2 audio data D15 supplied from the demultiplexer 23, and outputs it to the TV set 14 (Fig. 2).

Furthermore, the demultiplexer 23 takes in EPG data D_{EPG} (retained temporarily in the buffer memory 28) supplied from the front end 21, and sends it out to a multimedia processor 32 via the CPU 22.

The multimedia processor 32 is designed to create EPG data to display a program guide including a program schedule, and the created EPG data D19 is written into the DRAM 33 in the form of the bitmap format. The EPG data D19 written into the DRAM 33 is processed by the MPEG video decoder 24 and outputted to the TV set 14. Note that, since such program guide information (EPG data) is transmitted frequently, the update EPG data is always kept in the memory (not shown in figure) of the multimedia processor 32.

The TV set 14 (Fig. 2) visibly displays on the monitor 15 images obtained based on the video data D16 supplied from the IRD 13, and outputs audio sounds based on the audio data D17 simultaneously from a speaker (not shown in figure). The TV set 14 also visibly displays, as needed, on the monitor 15 the program guide obtained based on the EPG data supplied from the IRD 13.

As described hitherto, the IRD 13 selects a channel (carrier frequency) specified by a user out of the satellite broadcasting waves, thereby outputting to the TV set 14 the video data and audio data, and EPG data when required, obtained from the selected carrier frequency, and the TV set 14 provides a viewer with images and audio sounds, and a program guide when required, obtained based on each data supplied from the IRD 13.

Such an IRD 13, at its manufacturing stages, is provided with, as the front end 21, hardware structures (the tuner 41, the demodulator 42, the error corrector 43) to receive the satellite broadcasting waves described in Fig. 5 and to output the MPEG2 transport stream obtained from an arbitrary channel out of the satellite broadcasting waves, to the demultiplexer 23 (Fig. 3), and software (namely, the control application program 40B and the driver 40C that are indicated as functional blocks by a program stored in a prescribed memory (not shown in figure) inside the microcomputer 40).

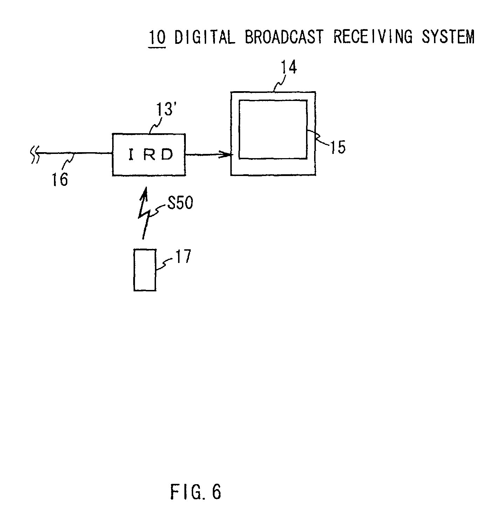

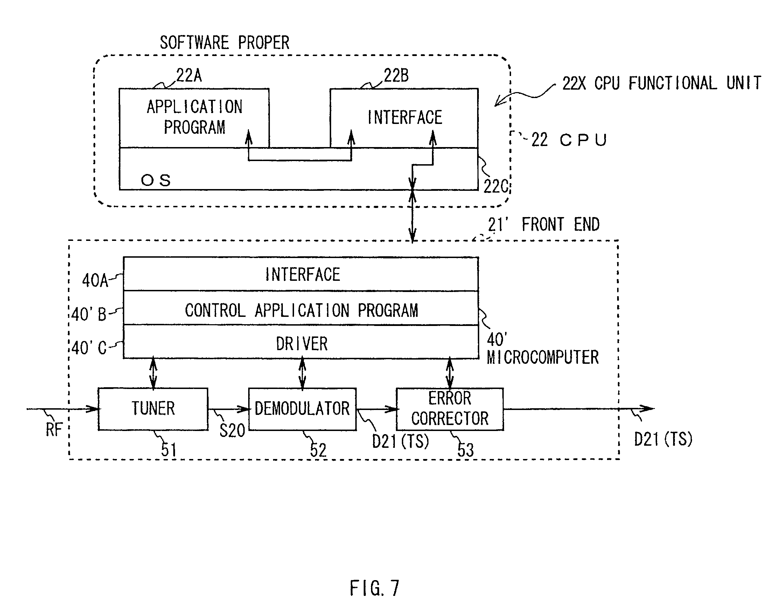

On the other hand, as shown in Fig. 6 in which the same reference numerals are applied to parts corresponding to those in Fig. 2, in the case of receiving CATV broadcasting waves distributed through an optical fiber cable 16 and of outputting given data (video data, audio data, EPG data, and the like) obtained from the CATV broadcasting waves to the TV set 14, the hardware structures and software inside the front end 21 are altered according to the CATV broadcasting waves at the manufacturing stages of the IRD. Specifically, a front end 21' for CATV broadcasting waves is installed as shown in Fig. 7 in which the same reference numerals are applied to parts corresponding to those in Fig. 5, in place of the front end 21 described in Fig. 5. Thus, an IRD 13' can be manufactured so as to receive the CATV broadcasting waves.

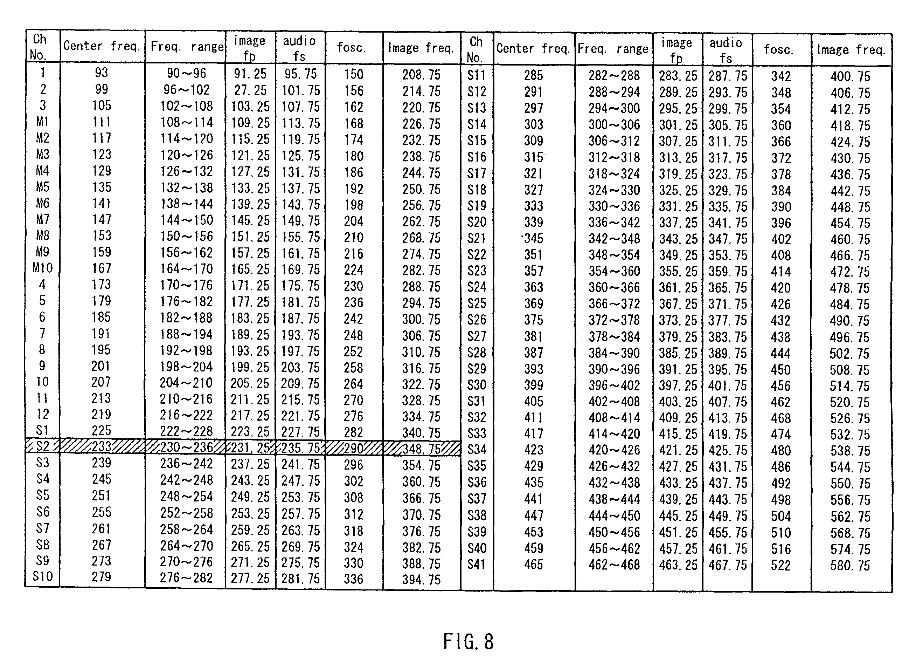

That is to say, the prescribed memory (not shown in figure) of the microcomputer 40' of the front end 21' stores in advance various programs to make the demultiplexer 23 (Fig. 3) output an MPEG 2 transport stream distributed using a carrier frequency allocated to each channel of the CATV broadcasting waves in Japan shown in Fig. 8.

When a user uses the remote controller 17 (Fig. 2) to specify the second channel as a desired channel out of the CATV broadcasting waves in Japan as shown in Fig. 8, the specified command is outputted, superimposed onto an infrared signal 50 by an IR (Infrared) transmitting unit (not shown in figure) of the remote controller 17, the infrared signal 50 is received by the IR receiving unit 27, and the received result is supplied to the CPU 22.

In this manner the CPU 22 selects the carrier frequency of the second channel specified by a user out of the CATV broadcasting waves received, by controlling the front end 21' indirectly according to the specified command from the remote controller 17 (Fig. 2), and then transmits the MPEG (Moving Picture Experts Group) 2 transport stream to the demultiplexer 23 (Fig. 3) using the selected carrier frequency.

That is, the OS 22C creates a control command to output to the demultiplexer 23 (Fig. 3) the MPEG2 transport stream distributed using a carrier frequency allocated to the second channel of CATV, by the application program 22A, and supplies it to the interface 22B.

The interface 22B transfers the control command transferred from the OS 22C to the control application program 40'B following the given procedure, using a command set defined in advance between the microcomputer 40' and the CPU 22, in accordance with the regulations of a communication protocol called I²C for example between the interface 22B and the interface 40A of the microcomputer 40'.

The control application program 40'B reads out of the prescribed memory of the microcomputer 40' a program to make the demultiplexer 23 (Fig. 3) output the MPEG 2 transport stream distributed using a carrier frequency allocated to the second channel of the CATV broadcasting waves, based on the control command transferred from the interface 22B via the interface 40A, and then transfers it to the driver 40'C.

The driver 40'C converts the contents of the program transferred from the control application program 40'B into data that the hardware structures (the tuner 51, the demodulator 52, and the error corrector 53) can recognize, to control the hardware structures.

That is, the tuner 51 selects the carrier frequency of the second channel by performing the tuning process on the CATV broadcast wave RF received, mixes the selected carrier frequency with the local frequency to obtain an intermediate frequency S20 (image frequency of 231.25MHz, audio frequency of 235.75MHz in Fig. 8) which is then transferred to the demodulator 52.

The demodulator 52 performs the demodulating process based on the 64 QAM (Quadrature Amplitude Modulation) method which is a demodulating method suitable for a CATV broadcast wave specified at this time, on the intermediate frequency S20 supplied from the tuner 51, to take out the data line D21 which is then transferred to the error corrector 53.

Furthermore, by using a data line which is allocated in advance for the error detection and other processes in the data line 21 supplied from the demodulator 52, the error corrector 53 transfers to the demultiplexer 23 (Fig. 3) the MPEG 2 transport stream obtained by performing the error detection and the error correction on the data line D21.

At the manufacturing stages of an IRD 13 as described above, when an IRD is manufactured in correspondence with a different transmission medium (e.g., satellite broadcasting waves or CATV broadcasting waves), the hardware structures in the front end, a control application program and a driver (software) to operate the hardware structures (the tuner 51, the demodulator 52, and the error corrector 53) are provided according to a transmission medium.

In this case, only the CPU functional unit 22X (namely, various programs stored in the prescribed memory such as the ROM) sends out a control command to the front end 21, 21', so that the CPU 22 of the IRD 13 can control the hardware structures indirectly. Therefore, the CPU functional unit 22X can use similar structures (the OS 22C, the application program 22A, and the interface 22B indicating various programs stored in the prescribed memory such as the ROM, as a functional block) in common in the case of a different transmission medium.

Accordingly, when an IRD 13 is manufactured so as to output to a TV set 14 given data which is received from a different transmission medium and is obtained based on an arbitrary channel (carrier frequency) out of the digital broadcasts, all that is needed is just to alter the hardware structures and software in the front end 21, 21' in the IRD 13.

As described above, the IRD 13 comprises the front end 21 or 21' of which hardware and software are altered according to a transmission medium, and data processing units (CPU 22, etc.) to perform, for example, processes on a transport stream, independent of transmission media. Accordingly, the hardware structures and software of the front end 21 or 21' are to be altered according to a transmission medium at the manufacturing stage of the IRD 13 .

The data processing unit (CPU 22) transfers a control command to the microcomputer 40, 40' provided in the front end 21, 21', using a command set defined in advance between the data processing unit (CPU 22) and the microcomputer 40, 40' provided in the front end 21, 21', according to a common protocol between the interface 22B provided in the data processing unit (CPU 22) and the interface 40A provided in the front end 21, 21'.

The control program 40B, 40'B inside the microcomputer 40, 40' of the front end 21, 21' can make (control) the hardware structures (the tuner 41, 51, the demodulator 42, 52, the error corrector 43, 53) execute various processing, with the control command supplied from the data processing unit (CPU 22).

As described above, the data processing unit (CPU 22) can control each block of the front end 21, 21' indirectly merely by transferring a control command to the front end 21, 21', without controlling it directly.

Thus, at the manufacturing stages of the IRD 13, the data processing unit (CPU 22) may not be altered, but only the hardware structures and software inside the front end 21, 21' may be altered, according to a transmission medium.

According to the above structure, since the data processing unit (CPU 22) can control the hardware structures in the front end 21, 21' merely by sending a common control command, independent of transmission media, an IRD 13 suitable for an individual transmission medium can be manufactured merely by altering the front end 21, 21' of which hardware and software can be altered according to a transmission medium, which may enhance its convenience for engineers in designing an IRD 13.

Note that, the foregoing embodiment has described the case where the front end 21 receives the satellite broadcasting waves and the MPEG transport distributed using an arbitrary carrier frequency out of the satellite broadcasting waves is outputted outside the front end 21 (that is, the case where a transmission medium is a digital satellite broadcasting system), and the case where the front end 21' receives the CATV broadcasting waves and the MPEG 2 transport distributed using an arbitrary carrier frequency out of the CATV broadcasting waves is outputted outside the front end 21' (that is, the case where a transmission medium is a CATV broadcasting system). The present invention, however, is not limited to this and may be applied to a variety of other transmission media such as a communications satellite broadcasting (CS) system and a ground wave broadcasting system.

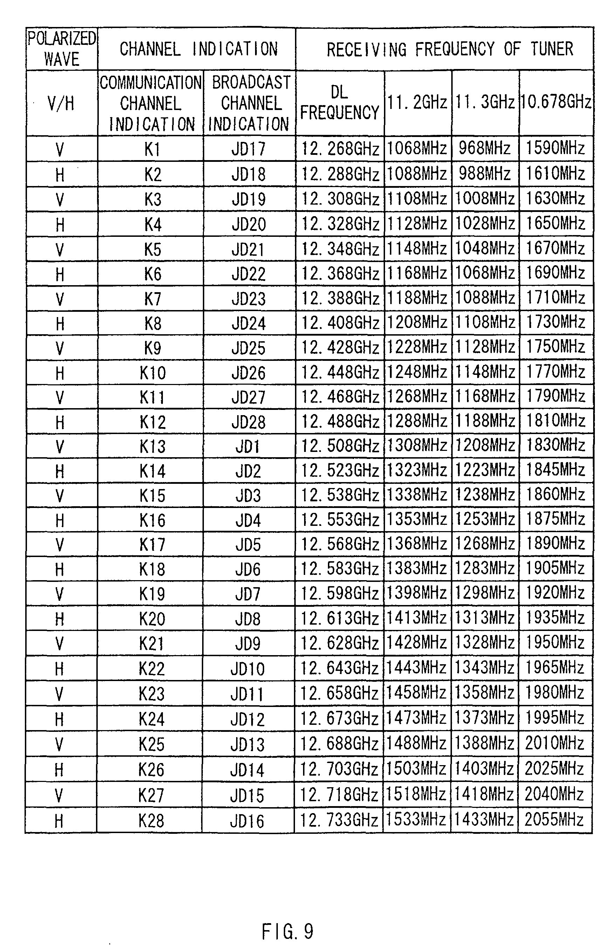

That is to say, in the case of receiving communications satellite broadcasting waves, for example, and outputting the MPEG 2 transport stream distributed using an arbitrary carrier frequency out of the communications satellite broadcasting waves to outside of the front end, as shown in Fig. 9, the control application program 40B, 40'B (namely, a program stored in the prescribed memory inside the microcomputer) includes (stores) various programs in advance at the manufacturing stages of the IRD 13 to output the MPEG 2 transport stream distributed using a carrier frequency allocated to each channel of the CS broadcasting waves to outside of the front end.

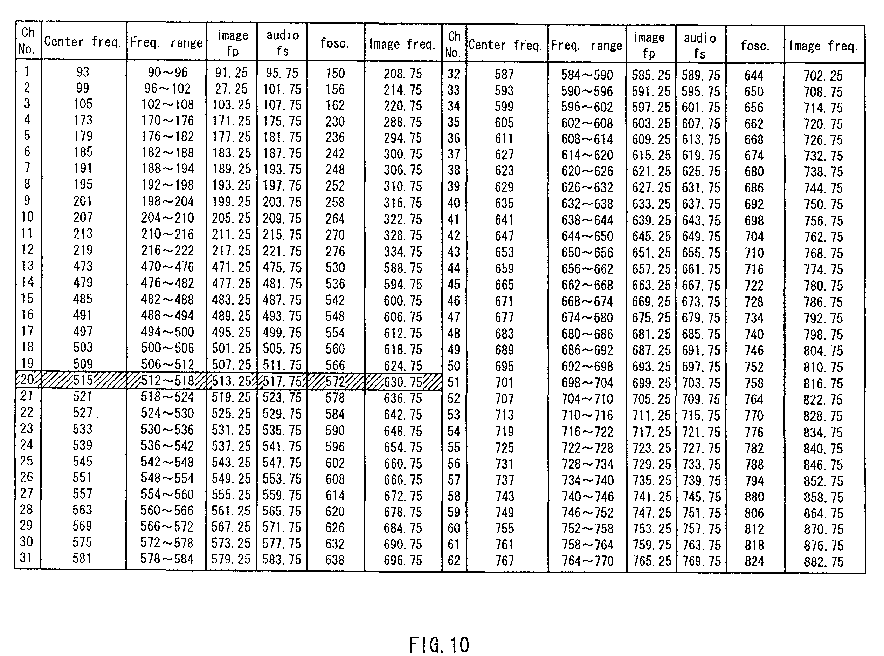

Also, for example, in the case of receiving ground broadcasting waves and outputting the MPEG 2 transport stream distributed using an arbitrary carrier frequency out of the ground broadcasting waves to outside of the front end, as shown in Fig. 10, the control application program 40B, 40' includes (stores) various programs in advance to output the MPEG 2 transport stream distributed using a carrier frequency allocated to each channel of the ground broadcasting waves to outside of the front end.

In this manner at the manufacturing stages of an IRD, a control application program (namely, a program stored in the prescribed memory inside the microcomputer) can include (store) various programs in advance to output the MPEG 2 transport stream distributed using a carrier frequency allocated to each channel of the transmission media to outside of the front end, according to a transmission medium of outputting an MPEG 2 transport stream to outside of the front end, out of the transmission media. Thus the IRD may be applied to a variety of transmission media.

Also, the foregoing embodiment has described the case of receiving the satellite broadcasting waves or the CATV broadcasting waves in Japan and outputting the MPEG 2 transport stream that is distributed using an arbitrary carrier frequency out of the satellite broadcasting waves or the CATV broadcasting waves to outside of the front end 21. However, the present invention is not limited to it, and may be applied to other zones including U.S.A.

In this case, at the manufacturing stages of an IRD, depending upon a zone where the IRD is used, a control application program (namely, a program stored in the prescribed memory (not shown in figure) inside the microcomputer 40) includes (stores) various programs in advance to output outside of the front end the MPEG 2 transport stream distributed using a carrier frequency allocated to each channel of the transmission media in the specific zone.

As described above, at the manufacturing stages of an IRD, depending upon a zone where a transmission medium is received, a control application program (namely, a program stored in the prescribed memory (not shown in figure) inside the microcomputer 40) includes (stores) various programs in advance to output outside of the front end the MPEG 2 transport stream distributed using a carrier frequency allocated to each channel of the transmission media in the specific zone, thus enabling the IRD to be used in various other zones.

Since the data processing unit (CPU 22) can control the hardware structures inside the front end merely by sending a common control command, independent of a zone where a digital broadcast is received, an IRD 13 suitable for a zone where a digital broadcast is received can be manufactured merely by altering the front end of which hardware and software can be altered according to a zone where the digital broadcast is received, which may increase the convenience for engineers in designing an IRD.

Also, the foregoing embodiment has described the case where a program corresponding to one transmission medium (the satellite broadcast or the CATV) is stored in advance into a prescribed memory (not shown in figure) inside the microcomputer 40 (40'). However, the present invention is not limited to this, and a program which corresponds to a plurality of transmission media and is applicable to various zones where IRDs are used may be stored in advance.

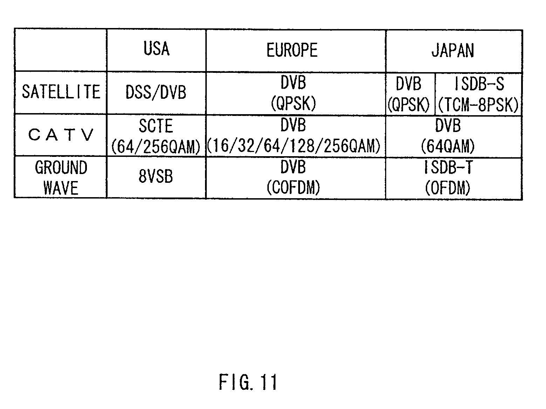

In this case, a program regarding a demodulating method, for example, for each transmission medium and zone as shown in Fig. 11 are stored into the control application program (namely, a program stored in the prescribed memory (not shown in figure) inside the microcomputer 40) at the manufacturing stages of an IRD. Also, the IRD is provided with a demodulator to perform the demodulating process for a plurality of transmission media, at the manufacturing stages.

In the case where the same program is broadcasted by both of the satellite broadcast and CATV broadcast for example, that is, in the case where the parts dependent on a transmission medium such as a transmission frequency and a modulation method only are different and the contents of an MPEG 2 transport stream are the same except for information (frequency information and information regarding modulation method, etc.) relating to transmission, the front end performs demodulation for a modulating method (e.g., QPSK, 8PSK modulation) corresponding to the satellite broadcast when receiving the satellite broadcast, while it performs demodulation for a modulation method (e.g., 64QAM modulation) corresponding to the CATV broadcast when receiving the CATV broadcast. In the case where the demodulator can cope with the modulating methods of the satellite broadcast and the CATV broadcast and a control application program stores in advance a program which can handle the both methods, an IRD is to be common for the satellite broadcast and CATV broadcast.

As described above, since the control application program (namely, a program stored in a prescribed memory (not shown in figure) inside the microcomputer 40) can include (store) in advance a program corresponding to a plurality of transmission media according to a zone where the transmission medium is received, at the manufacturing stages of an IRD, in the case where a demodulator which corresponds to the demodulating processing of a plurality of transmission media is installed at the manufacturing stages of an IRD, demodulation can be performed according to the transmission media no matter where zone the IRD is used, or no matter what a transmission medium is received in a zone where the IRD is used.

Next, explanation is given on a digital broadcast receiving system in the case of receiving ground digital broadcasting waves.

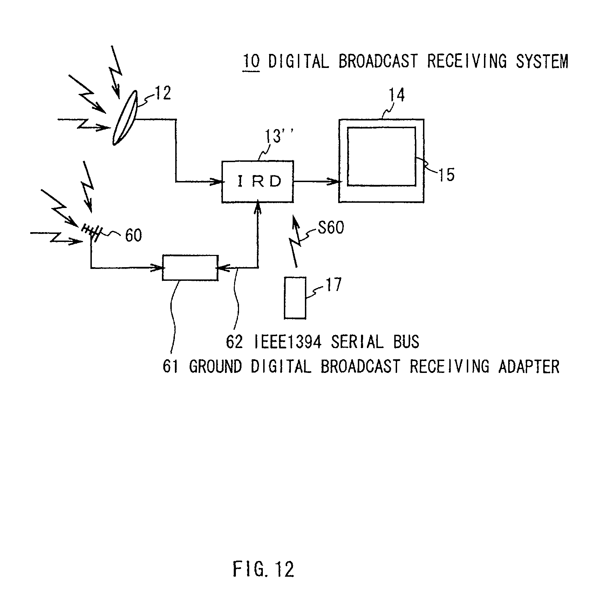

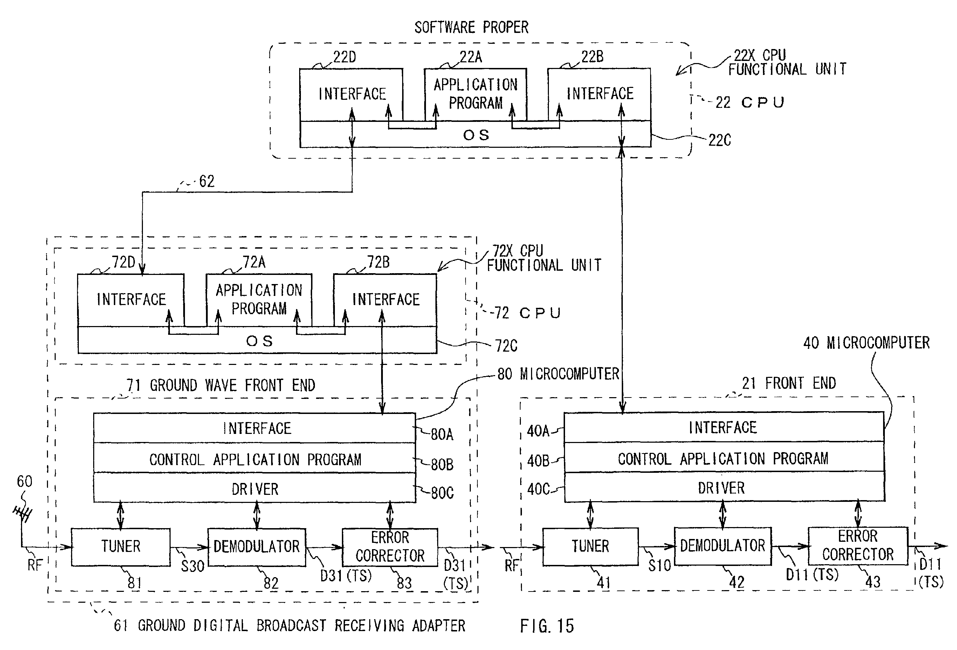

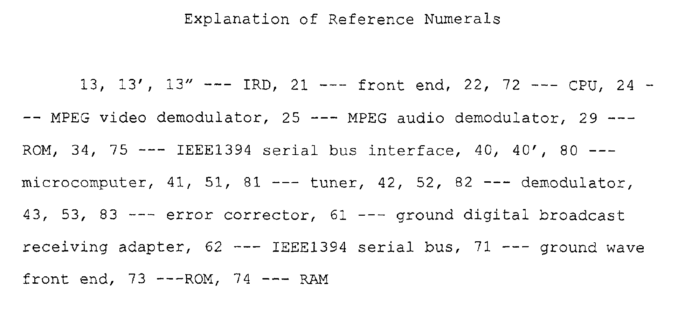

Fig. 12 shows a structural example of a digital broadcast receiving system for receiving and processing ground digital broadcasting waves in addition to the BS broadcasts. In this instance, connected to an IRD 13" with an IEEE 1394 serial bus 62 based on the IEEE (Institute of Electrical and Electronics Engineers) 1394 is a ground digital receiving adapter 61 (called "ground adapter 61" hereinafter) including a front end 71 (refer to Fig. 15 to be described later) comprising a tuner 81, a demodulator 82 and an error corrector 83 to process ground digital broadcasting waves received via the antenna 60, so that a user can watch not only the satellite digital broadcasts but also the ground digital broadcasts.

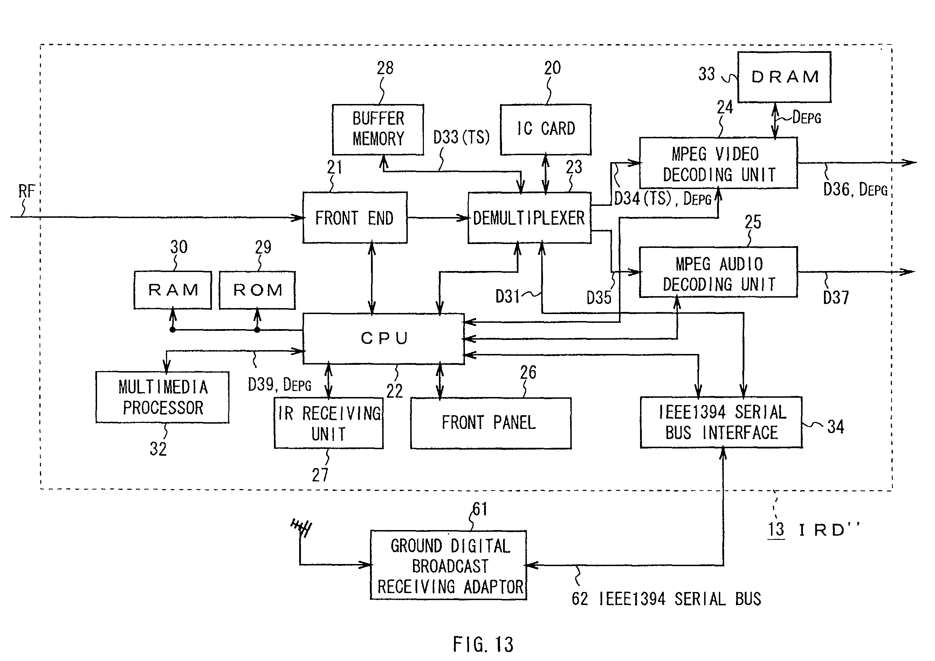

An IRD 13" capable of processing the ground digital broadcasting waves is structured as shown in Fig. 13. The IRD 13" has an IEEE serial bus interface 34 to perform the interface process to give and receive information to and from another device (in this instance, the ground adapter 61) through an IEEE1394 serial bus 62. Other parts of the structure are the same as those of the IRD 13 shown in Fig. 3.

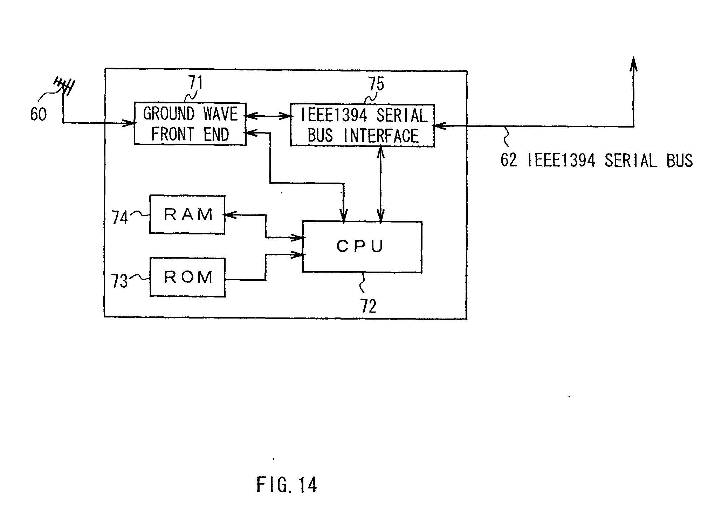

Fig. 14 is a block diagram showing a structural example of the ground adapter 61. The CPU 72 loads a program stored in the ROM 73 on RAM 74 based on a control command given from the CPU 22 of the IRD 13", to control the creation process of a transport stream in a ground wave front end 71. A transport stream created in the ground wave front end 71 is supplied to the IRD 13 through the IEEE1394 serial bus interface 75 and IEEE1394 serial bus 62.

Next, explanation is given on the operations of these devices. When a user operates the remote controller 17 (Fig. 12) to specify the 20th channel as a desired channel for example out of the digital broadcasting waves in Japan shown in Fig. 10, the specified command is outputted and superimposed onto an infrared signal S60 by the IR transmitting unit of the remote controller 17. The outputted infrared signal S60 is received by the IR receiving unit 27 which transmits the reception result to the CPU 22.

The CPU 22 creates a control command in accordance with the command specified with the remote controller 17. The CPU 22 controls the ground adapter 61 indirectly through the IEEE1394 serial bus 62 using the control command so as to receive the carrier frequency of the 20th channel specified by the user out of the digital broadcasting waves, via the antenna 60, whereby supplying an MPEG 2 transport stream distributed to the demultiplexer 23.

There are, as a control command created by the CPU 22: a DSIT (Direct Select Information Type) command to make a notice of the frequency (frequency of a user-desired channel) of the ground digital broadcasting waves that the ground adapter 61 has to receive; a command (Tuner States Descriptor) to recognize the state of the ground adapter 61; and a command (Tuner Subnit Identifier Descriptor) to recognize the ground adapter 61. These commands are regulated by the "BS Digital Broadcast Receiving Apparatus Standard Specifications" (Version ARID STD-B21 1.1). Note that, in a ground digital broadcast receiving system according to the present invention, a command created by the CPU 22 of the IRD 13" are converted into a data format recognizable for the ground front end 71, by applying processing such as addition of lacked data.

Fig. 15 is a diagram explaining the transmission and reception relationship of information including command information between the CPU 22 and other devices (the front end 21 and the ground adapter 61). When a user selects a program carried upon the satellite digital broadcasting waves with the remote controller 17, the transmitting and receiving processes as described above are performed on information by the CPU 22 and front end 21. On the other hand, when a program to be carried upon the ground digital broadcasting waves is selected, the following processes are conducted by the CPU 22 and ground adapter 61.

That is, the OS 22C makes the application program 22A create a control command to supply the demultiplexer 23 (Fig. 13) with an MPEG 2 transport stream distributed using a carrier frequency allocated to the 20th channel of the ground digital broadcasting waves, transfers it to an interface 22D to notify the ground adapter 61. The interface 22D transfers the control command to the ground adapter 61 through the IEEE1394 serial bus 62.

As in the case of the IRD 13, the CPU functional unit 72X of the CPU 72 of the ground adapter 61 comprises an application program 72A, an interface 72B, an OS 72C, and an interface 72D. The interface 72D supplies the control command transferred from the interface 22D, to the application program 72. The application program 72A applies processes such as affixing of lacked data to the control command to convert it into a control command recognizable for the ground front end 71, under the control of the OS 72C. The application program 72A transfers to the interface 72B the control command in the form of data format recognizable for the ground wave front end 71, to notify the ground front end 71.

The interface 72B transfers the control commands processed by the application program 72A, to the control application program 80B via the interface 80A, following the given procedure, in accordance with a communication protocol which is called I²C between the interface 80A of the microcomputer 80 of the ground wave front end 71 and the interface 72B.

The control application program 80B reads out of a prescribed memory (not shown in figure) inside the microcomputer 80 a program to output to the demultiplexer 23 (Fig. 13) an MPEG 2 transport stream distributed using a carrier frequency allocated to the 20th channel of the ground digital broadcasting waves based on the control command transferred via the interface 80A, and transfers the program to the driver 80C.

The driver 80C converts the contents of the program transferred from the control application program 80B into a data format recognizable for the hardware (the tuner 81, the demodulator 82, and the error corrector 83), to control the hardware.

That is, the tuner 81 selects the carrier frequency of the 20th channel by performing the tuning process on a ground digital broadcast wave RF received via the antenna 60, mixes the selected carrier frequency with the local frequency to obtain an intermediate frequency S30 (image frequency of 513.25MHz, audio frequency of 517.75 MHz in Fig. 10) which is then sent to the demodulator 82.

The demodulator 82 takes out a data line D31 by performing the demodulating process based on the OFDM (Orthogonal Frequency Division Multiplex) method which is a demodulating method corresponding to the ground digital broadcasting waves, on the intermediate frequency S30 supplied from the tuner 81, and sends it out to the error corrector 83.

The error corrector 83 performs processes such as the error detection on the data line D31 supplied from the demodulator 82 using a data line allocated in advance. The error corrector 83 supplies an MPEG 2 transport stream obtained by performing the error detection and the like, on the data line D31, to the demultiplexer 23 (Fig. 13) through the IEEE1394 serial bus interface 75 and IEEE1394 serial bus 62.

Subsequently, the demultiplexer 23 performs the descrambling process on the supplied transport stream (D31) in the buffer memory 28 using a de-scramble key supplied from the IC card 20, to output the extracted video data (D34) to the MPEG video decoder 24 and to output the audio data (D35) to the MPEG data decoder 24. The data (D36, 37, Q_{EPG}) subjected to the decoding process based on the MPEG 2 standards in the MPEG video decoder 24 and the MPEG audio decoder 25 is outputted to a monitor and a speaker (not shown in figure), so that the user can watch a program carried upon the ground digital broadcasting waves.

In Fig. 13, the ground adapter capable of receiving ground digital broadcasts is used as the hardware connected to the IEEE1394 serial bus interface 34, however, newly proposed various broadcasting (communicating) methods may also be applied. Further, a plurality of IEEE1394 serial bus interfaces 34 may be provided to process various formats of data at once and to output them to a monitor (not shown) at once. In this case, the software that the CPU 22 uses may be installed over a network including ground waves, a satellite digital broadcast network, and a CATV network.

The foregoing embodiment has described the case of providing the microcomputer 40 in the front end 21 as well as of providing the microcomputer 40' in the front end 21'. However, the present invention is not limited to this, and an microcomputer may be provided in the hardware having a tuner, a demodulator, and an error corrector of a front end. This case also can obtain the similar effects to the aforementioned embodiments of the present invention.

Also, the foregoing embodiment has described the case of storing a program corresponding to existing broadcasting waves (the satellite broadcasting waves or the CATV broadcasting waves) into a prescribed memory (not shown in figure) inside the microcomputer 40 (or 40'). However, the present invention is not limited to this, and a program corresponding to broadcasting waves expected to be provided in the future may be stored into a prescribed memory (not shown in figure) inside the microcomputer 40 (or 40'). In this case, hardware (a tuner, a demodulator, and an error corrector) corresponding to broadcasting waves expected to be provided in the future is installed in an IRD, so that reception is available merely by installing a program corresponding to the broadcasting waves expected to be provided in the future into a prescribed memory inside a microcomputer.

Also, the foregoing embodiment has described the case of providing the driver 40C in the microcomputer 40 and also the case of providing the driver 40' C inside the microcomputer 40'. However, the present invention is not limited to this, and a part of the function (program) of the driver may be installed in each of the tuner, the demodulator, and the error corrector of the front end. This case also can obtain the same effect as the aforementioned embodiments of the present invention.

Furthermore, the foregoing embodiment has described the case where the OS 22C (interface 22B) sends a control command to the control application program 40B or 40'B inside the microcomputer 40 in accordance with the regulations of a communication protocol called I²C. However, the present invention is not limited to it, and the OS 22C (interface 22B) may send a control command to the control application program 40B or 40'B in accordance with the regulations of various other communication protocols.

According to the first receiving apparatus and method of the present invention, processing means is controlled by converting a control command transferred from a main control means into data recognizable for processing means, so that it is possible to effectively control the receiving apparatus even in the case of changing a receiving zone where the receiving apparatus is used and a transmission medium.

### Industrial Applicability

This invention can be applied to a receiving apparatus and a receiving method for receiving and demodulating broadcasting waves distributed via a broadcast satellite in, for example, a digital satellite broadcasting system.

## Claims

1. A receiving apparatus, comprising:
receiving and demodulating means for performing a given receiving and demodulating process in accordance a transmission medium; and
main control means for controlling operations of said receiving and demodulating means, wherein:
said receiving and demodulating means, comprises:
processing means for processing a signal received via said transmission medium;
interface means for performing an interface process for transmitting and receiving a control command to control said processing means to/from said main control means, using a given command set defined in advance with said main control means, in accordance with a given communication protocol; and
process control means for controlling said processing means by converting said control commands obtained by said interface means from said main control means into data recognizable for said processing means.

2. The receiving apparatus according to Claim 1, wherein
said control command is a common control command independent of said transmission medium.

3. The receiving apparatus according to Claim 1, wherein
said control commands is a common control command, independent of a reception zone where said processing means is used.

4. The receiving apparatus described under Claim 1, wherein
said main control means further comprises changing means for performing an altering process necessary for transferring said control command through a bus.

5. The receiving apparatus according to Claim 4, wherein
said bus is an IEEE1394 serial bus.

6. A receiving method, comprising:
a receiving and demodulating step of performing given receiving and demodulating processes according to a transmission medium; and
a main control step of controlling operations of the receiving and demodulating processes by said receiving and demodulating step, wherein
said receiving and demodulating step comprises:
a processing step of processing a signal received via said transmission medium;
an interface step of performing an interface process for transmitting and receiving a control command to control the process in said processing step to/from said main control means, using a given command set defined in advance with said main control means that performs the process of said main control step, in accordance with a given communication protocol; and
a process control step of controlling the process of said processing step by converting said control command obtained from said main control means obtained by the process of said interface step into data recognizable for the processing means that performs the process of said processing step.
